# EUROPÄISCHE PATENTSCHRIFT

(11) **EP 0 850 254 B1**
(45) Veröffentlichungstag und Bekanntmachung des Hinweises auf die Patenterteilung: **25.09.2002**
(21) Anmeldenummer: 96930996.2
(22) Anmeldetag: 02.09.1996
(51) Int. Cl.: C08F 4/58, B01J 31/12, C08G 77/08

(54) **DIE VERWENDUNG VON ZINN-KATALYSATOREN SOWIE VERNETZBARE MISCHUNGEN, DIESE KATALYSATOREN ENTHALTEND**
USE OF TIN CATALYSTS AND CROSS-LINKABLE MIXTURES CONTAINING THEM
L'UTILISATION DES CATALYSEURS A L'ETAIN ET MELANGES RETICULABLES CONTENANT LESDITS CATALYSEURS

(30) Priorität: 13.09.1995 DE 19533963
(43) Veröffentlichungstag der Anmeldung: 01.07.1998
(73) Patentinhaber: GE Bayer Silicones GmbH & Co. KG, 40699 Erkrath (DE)
(72) Erfinder: FRIEBE, Robert, D-51373 Leverkusen (DE); SATTLEGGER, Hans, D-51519 Odenthal (DE); SOCKEL, Karl-Heinz, D-51373 Leverkusen (DE); WEBER, Wilhelm, D-51373 Leverkusen (DE); WILMS, Axel, D-51467 Bergisch Gladbach (DE)
(86) Internationale Anmeldenummer: EP9603838
(87) Internationale Veröffentlichungsnummer: WO97010271

(56) Entgegenhaltungen:
- GB-A- 1 348 402
- JP-A- 2 029 425
- JP-A- 2 029 426

## Beschreibung

Die vorliegende Erfindung betrifft eine neue Verwendung von Zinn-Katalysatoren, sowie vernetzbare Mischungen, enthaltend diese Zinn-Katalysatoren.

Die Verwendung organischer Zinnverbindungen als Katalysatoren in kondensationsvernetzenden 1 und 2 Komponenten Polysiloxanmassen, im folgenden RTV-1 bzw. -2 (Raumtemperatur vulkanisierende 1 bzw. 2 Komponenten) Massen genannt, die durch Einwirkung von Wasser oder unter Zutritt von Luftfeuchtigkeit zu Elastomeren aushärten, ist allgemein bekannt.

Als Katalysatoren in Polysiloxanmassen werden üblicherweise Diorganylzinnverbindungen, wie Dialkyzinndicarboxylate bzw. deren Umsetzungsprodukte mit Alkoxysilanen, eingesetzt. Beispiele für solche Verbindungen sind u. a. Dibutylzinndiacetat, Dibutylzinndioctoat, Dibutylzinndilaurat, Dioctylzinndioctoat, Dioctylzinndilaurat oder Umsetzungsprodukte von Dibutylzinnoxid mit Kieselsäureestern wie Polymethysilicat, Tetraethoxysilicat und Polyethylsilicat.

In US-A 3 525 778 werden zudem Organophosphatostannane der allgemeinen Formel

R₄₋ₘ₋ₙSn(Yₘ)[OP(O)(OR' )₂]ₙ

worin
- Y: eine Halogen-, Alkoxy- oder Aryloxygruppe,
- R und R': gegebenenfalls substituierte Kohlenwasserstoffreste bedeuten,
- m: 0, 1, oder 2 und n 1, 2 oder 3 und die Summe von m + n 1, 2 oder 3 ist,
sowie deren Verwendung als Katalysatoren bei der Härtung von Polysiloxanmassen beschrieben. Diese Produkte zeichnen sich durch hohe Aktivitäten aus und führen zu einer raschen Härtung der Polysiloxanmassen.

Die aus der Literatur bekannten Zinnkatalysatoren weisen bei ihrem Einsatz in Polysiloxanmassen jedoch den Nachteil auf, daß sie neben der gewünschten katalytischen Wirkung auf die Kondensationsreaktion auch unerwünschte Polymerabbaureaktionen bewirken. Dies äußert sich beispielsweise in dem Verlust bzw. einer Verlangsamung der Vernetzungsfähigkeit von RTV-1 Produkten. Auch bei RTV-2 Produkten, bei denen üblicherweise der Katalysator in einer getrennten Komponente gelagert wird und erst kurz vor der Anwendung des Produktes mit der anderen Komponente vermischt wird, kann es zu Polymerabbaureaktionen kommen. Dies drückt sich u. a. darin aus, daß die Katalysator-Komponente, insbesondere bei pastenförmigen Formulierungen, im Verlauf der Lagerung abgebaut wird und die Viskosität unerwünschterweise sinkt bzw. die Reaktivität einer Veränderung unterliegt.

Aufgabe der vorliegenden Erfindung war die Bereitstellung einer neuen Verwendung von Zinnkatalysatoren, die die Nachteile bekannter Produkte nicht aufweisen und als Katalysatoren für RTV-1 bzw. -2-Massen geeignet sind.
Überraschenderweise wurde gefunden, daß Umsetzungsprodukte von organischen Zinnverbindungen mit Orthophosphorsäure und/oder deren Estern gegenüber den aus der Literatur bekannten Verbindungen deutliche Vorteile aufweisen. Die erfindungsgemäßen verwendeten Zinnkatalysatoren sind besonders gut als Katalysatoren für kondensationsvernetzende Polysiloxanmassen zur Herstellung von RTV-Produkten mit deutlich verbesserter Lagerfähigkeit geeignet. Die Katalysatoren zeichnen sich zudem durch hohe Reaktivitäten aus.
Gegenstand der vorliegenden Erfindung ist daher die Verwendung von Zinn-Katalysatoren als Katalysatoren für kondensationsvernetzende Polysiloxanmassen wie im Anspruch 1 definert.

Der Begriff organische Zinnverbindungen a) umfaßt alle nach dem Stand der Technik bekannten Verbindungen.

Als organische Zinnverbindungen a) sind Mono-, Di- und Triorganylzinnverbindungen der allgemeinen Formel (I)

R¹ ₄₋ₙSnXₙ (I)

mit
- n =: 1, 2 oder 3, bevorzugt n = 2,
- R¹ =: lineare oder verzweigte C₁-C₃₀-Alkyl-, C₅-C₁₄-Cycloalkyl- oder C₆-C₁₄-Arylreste und
- X =: Halogen, -OR¹, -OC(O)R¹-OH, -SR¹, -NR¹₂, -NHR¹, -OSiR¹₃, -OSi(OR)¹₃ und/oder Verbindungen der allgemeinen Formel R¹₂SnX', R¹₃SnX'_{1/2} und/oder R¹SnX'_{3/2} mit X' = O, S, bevorzugt.

Die Wasserstoffatome der linearen oder verzweigten C₁-C₃₀-Alkyl, C₅-C₁₄-Cycloalkyl- oder C₆-C₁₄-CArylreste können dabei auch durch Halogenatome, OH-, NH₂-, NO₂- oder C₁-C₆-Alkylreste substituiert sein.

Zudem können die Reste X, X' und R¹, sofern diese mehrmals im Molekül vorkommen, gleich oder ungleich sein.

Besonders bevorzugt sind Dioctylzinnoxid, Dibutylzinnoxid, Dimethylzinndichlorid, Dibutylzinndichlorid, Tributylzinnchlorid, Dibutylzinndilaurat, Dibutylzinndiacetat, Dibutylzinnmaleat, Dibutylzinndihexoat, Dibutylzinndioctoat, Dioctylzinndioctoat, Dioctylzinndilaurat, Dioctyldibutoxystannan und/oder Tributylethoxystannan.

Die Komponente b) ist vorzugsweise eine Verbindung der folgenden Formel (II)

O=P(OR²)₃₋ₘ(OR³)ₘ (II),

mit
- m =: 2 oder 3, bevorzugt 2,
- R² =: lineare oder verzweigte C₁-C₃₀-Alkyl-, Acyl-, C₂-C₃₀-Alkenyl- oder Alkoxyalkyl-, C₅-C₁₄-Cycloalkyl- oder C₆-C₁₄-Arylreste oder ein Triorganylsilyl- oder Diorganylalkoxysilylrest,
- R³ =: Wasserstoff und/oder ein Metall, vorzugsweise ein Alkali- oder Erdalkalimetall,
und/oder Verbindungen der Formel III 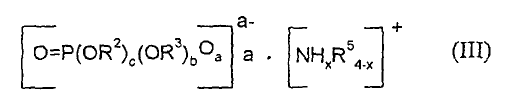 und x Werte von 1 bis einschließlich 3 annehmen kann
- R⁵ =: C₁-C₃₀ Alkyl und (CH₂)_{z}Si(OR⁶)₃
- mit z =: 1-10, bevorzugt 3, mit a + b + c = 3, wobei
a Werte von 1 bis einschließlich 3,
b Werte von 0 bis einschließlich 2 und
c Werte von 0 bis einschließlich 2 annehmen kann,
- R⁶ =: C₁-C₅-Alkyl, C₂-C₆-Alkylalkoxy und/oder
Ester der Polyphosphorsäure.

In einer bevorzugten Ausführungsform der Erfindung ist die Verbindung der Formel III 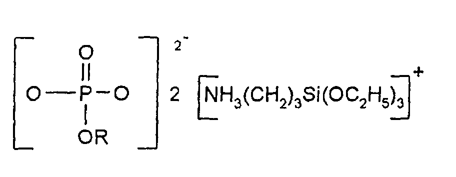 Die Wasserstoffatome der linearen oder verzweigten C₁-C₃₀-Alkyl-, Acyl, C₂-C₃₀-Alkenyl- oder -Alkoxyalkyl-, C₅-C₁₄-Cycloalkyl- oder C₆-C₁₄-Arylreste können dabei auch z.B. durch Halogenatome, OH-, NH₂-, NO₂- oder weitere C₁-C₆-Alkylgruppen substituiert sein.

In einer bevorzugten Ausführungsform der vorliegenden Erfindung enthalten die Monoorthophosphorsäureester als R² mindestens einen linearen oder verzweigten C₄-C₃₀-Alkylrest. Beispiele für bevorzugte Ester sind Monobutylphosphat, Mono-isodecylphosphat, Mono-(2-ethylhexyl)-phosphat, Monodecylphosphat, Monohexylphosphat, Monotridecylphosphat und/oder Monooctadecylphosphat. Herstellbedingt können die Monoorthophosphorsäureester b) als Verunreinigungen Diester, Ester der Polyphosphorsäuren und/oder Orthophosphorsäure enthalten. Orthophosphorsäure alleine ist weniger bevorzugt und wird bevorzugt im Gemisch mit deren Estern eingesetzt.

Die erfindungsgemäßen Zinn-Katalysatoren umfassen, für den bevorzugten Fall mit n = 2, vorzugsweise folgende Struktureinheiten bzw. Verbindungen:

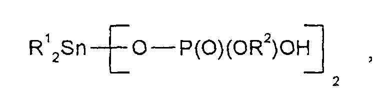

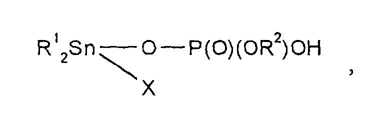

―(R¹ ₂)Sn―O―P(O)(OR²)―O―Sn(R¹ ₂)― ,

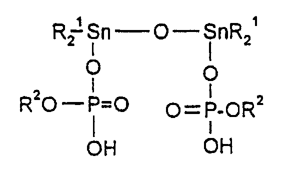

und/oder 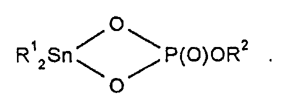 Phosphorsäureester c) im Sinne der Erfindung sind vorzugsweise Di- und Triester der Orthophosphorsäure und/oder der Polyphosphorsäure.

Beispiele für bevorzugte Phosphorsäurester c) sind sekundäre und tertiäre Ester der Orthophosphorsäure wie Dibutylphosphat, Di-(2-ethylhexyl)-phosphat, Dihexadecylphosphat, Diisononylphosphat, Di-(trimethylsilyl)-phosphat, Tributylphosphat, Tri-(2-ethylhexyl)-phosphat, Trihexadecylphosphat, Tri-isononylphosphat und/oder Tri-(trimethylsilyl)-phosphat.

Komponente c) umfaßt ebenfalls Ester der Polyphosphorsäure oder Gemische aus mehreren Polyphosphorsäureestem und/oder Orthophosphorsäureestern. Geeignet sind ebenfalls saure oder neutrale Salze der Ortho- und Polyphosphorsäureester wie z.B. Alkalimetallsalze.

Alkoxysilane d) im Sinne der Erfindung sind vorzugsweise Kieselsäureester, wie z.B. Polymethylsilicat, Tetramethylsilicat, Polyethylsilicat, Tetraethylsilicat, Tetrapropylsilicat, Organyltrialkoxysilane, wie z.B. Vinyltrimethoxysilan, Vinyltriethoxysilan, Methyltriethoxysilan, Methyltrimethoxysilan, Vinyltripropoxysilan und Vinyltriethoxysilan bzw. deren Teilhydrolysate.

Besonders bevorzugt sind dabei Methyltrimethoxy-, Methyltriethoxy-, Vinyltrimethoxyund/oder Vinyltriethoxysilan.
Die erfindungsgemäß verwendeten Mischungen können zudem weitere Hilfsstoffe enthalten.

Diese Hilfsstoffe sind vorzugsweise organische Lösungsmittel, wie z.B. Toluol, Hexan, Isoparaffine, Farbpigmente und/oder organische Säuren, wie z.B. 2-Ethylhexansäure, Benzoesäure, Dodecylbenzolsulfonsäure.

Bevorzugt im Sinne der Erfindung sind Zinn-Katalysatoren, erhältlich durch die Umsetzung von
1 mol mindestens einer organischen Zinnverbindung a), besonders bevorzugt einer Diorganylzinnverbindung
0,5 bis 4 mol, bevorzugt 1 bis 3 mol, besonders bevorzugt 1,5 bis 2,5 mol mindestens eines Monoorthophosphorsäureesters und/oder Orthophosphorsäure b), bevorzugt Monoorthophorsphorsäure
0 bis 2 mol, bevorzugt 0 mol, Di- und/oder Triothophosphorsäureester c) und
0 bis 5 mol mindestens eines Alkoxysilans d).

Ganz besonders bevorzugt sind Zinn-Katalysatoren erhältlich durch die Umsetzung von
1 mol mindestens einer Diorganylzinnverbindung a) mit
1 bis 3 mol mindestens eines Monoorthophosphorsäureesters und
0 bis 5 mol mindestens eines Alkoxysilans.

Die erfindungsgemäß verwendeten Zinn-Katalysatoren sind vorzugsweise durch Umsetzung der entsprechenden Zinn- mit den Phosphorverbindungen bei Temperaturen zwischen 20 und 200°C, vorzugsweise zwischen 20 und 140°C, erhältlich. In einer weiteren Ausführungsform der vorliegenden Erfindung findet die Umsetzung vorzugsweise in einem geeigneten organischen Lösungsmittel statt. Geeignet hierfür sind alle inerten Lösungsmittel, wie beispielsweise die aromatischen Kohlenwasserstoffe, wie Benzol, Toluol, Xylol sowie aliphatische gegebenenfalls halogenierte Kohlenwasserstoffe, wie z.B. Hexan, Heptan und Tetrachlorkohlenstoff. Die Umsetzung findet dabei üblicherweise bei Temperaturen zwischen 20 und 200°C statt, wobei die Reaktionstemperatur bei Verwendung eines Lösungsmittel durch dessen Siedetemperatur mitbestimmt wird.

In einer weiteren bevorzugten Ausführungsform sind die Zinn-Katalysatoren durch die Umsetzung mindestens einer organischen Zinnverbindung a), mindestens einem Monoorthophosphorsäureester und/oder Orthophosphorsäure b), gegebenenfalls zusätzlichen weiteren Phosphorsäureestern c) und gegebenenfalls einem oder mehreren Alkoxysilanen d) bei einer Temperatur von 20 bis 140°C erhältlich.

Ein Verfahren zur Herstellung der erfindungsgemäß verwendeten Zinn-Katalysatoren ist dadurch gekennzeichnet, daß
a) mindestens eine organische Zinnverbindung mit
b) mindestens einem Monoorthophosphorsäureester und/oder Orthophosphorsäure und
c) gegebenenfalls weiteren Phosphorsäureestern und
d) gegebenenfalls einem oder mehreren Alkoxysilanen umgesetzt wird.

Bei dieser Umsetzung können zudem weitere Hilfsstoffe, wie z.B. organische Lösungsmittel, wie z.B. Toluol, Hexan, Isoparaffine, Farbpigmente und/oder organische Säuren, wie z.B. 2-Ethylhexansäure, Benzoesäure, Dodecylbenzolsulfonsäure zugegen sein.

Vorzugsweise findet diese Umsetzung bei Temperaturen zwischen 20 und 200°C, bevorzugt 20 bis 140°C, statt.

Gegenstand der Erfindung ist besonders bevorzugt die Verwendung der Zinn-Katalysatoren als Katalysatoren in vernetzbaren RTV-1 und -2-Massen.

Für die Verwendung der Katalysatoren in RTV-2 Produkten ist es vorteilhaft Füllstoffe, wie z.B. hochdisperse Kieselsäuren, Paraffine, Vaseline oder Wachse einzusetzen, um eine pastöse Darreichungsform zu erreichen. Die Menge an Hilfsstoffen, bezogen auf die Summe aller Bestandteile a) bis d), richtet sich stark nach der Art der verwendeten Bestandteile sowie ihrer Konzentration und der gewünschten Konsistenz der pastösen Zubereitungsform.
Gegenstand der Erfindung sind darüberhinaus vernetzbare RTV-Massen, enthaltend mindestens einen erfindungsgemäßen Zinn-Katalysator,
mindestens ein vernetzungsfähiges Polysiloxan,
gegebenenfalls einen oder mehrere Silanvernetzer,
gegebenenfalls Füllstoffe und
gegebenenfalls weitere Zusatz- und Hilfstoffe.
Die erfindungsgemäßen RTV-Massen können dabei 1- oder 2-Komponentensysteme sein. Bei den 1-Komponentensystemen werden alle Bestandteile gemeinsam vermischt. 2-Komponentensysteme werden in Form von zwei voneinander getrennten Komponenten hergestellt und erst kurz vor der Anwendung miteinander vermischt. Dabei wird üblicherweise in einer Komponente das vernetzungsfähige Polysiloxan und in der anderen der Silanvernetzer und Katalysator getrennt voneinander aufbewahrt.
Die Menge des erfindungsgemäßen Zinn-Katalysators beträgt vorzugsweise 0,005 bis 5 Gew.%, bevorzugt von 0,01 bis 2,0 Gew.-%, besonders bevorzugt von 0.1 bis 1 Gew.%, bezogen auf die Summe aller Komponenten.
Vernetzungsfähige Polysiloxane im Sinne der Erfindung sind Polydiorganosiloxane, vorzugsweise Polydimethylsiloxane, wobei gegebenenfalls die Methylgruppen teilweise durch Vinyl-, Phenyl-, C₂- bis C₈-Alkyl- oder Halogenalkvlgruppen ersetzt sein können. Die Polydimethylsiloxane sind vorzugsweise im wesentlichen linear, geringe Anteile verzweigend wirkender Organosiloxyeinheiten können jedoch anwesend sein. Die Viskositäten der Polymere liegen vorzugsweise zwischen 0,1 und 1000 Pas, besonders bevorzugt zwischen 5 und 1000 Pas. Zudem kann das vernetzungsfähige Polydiorganosiloxan partiell durch unreaktive Reste, wie beispielsweise Trimethylsiloxyreste, substituiert sein.

In RTV-1 Massen sind als reaktionsfähige Reste der Polysiloxane OH-Gruppen oder Trialkoxysilyl- oder Dialkoxysilyl-Reste bevorzugt. Als Trialkoxysilyl- oder Dialkoxysilylreste sind Triethoxysilyl- und Trimethoxysilyl-, Diethoxymethylsilyl-, Diethoxyvinylsilyl-, Dimethoxymethylsilyl- oder Dimethoxyvinylsilyl-Reste bevorzugt.

In einer bevorzugten Ausführungsform der vorliegenden Erfindung wird das vernetzungsfähige Polysiloxan mit Trialkoxysilyl- oder Dialkoxysilyl-Gruppen als reaktionsfähige Reste durch ein geeignetes Verfahren im Verlauf der Herstellung der RTV-Produkte hergestellt (siehe z. B. DE-A 4 207 212).

In RTV-2 Massen sind die reaktionsfähige Reste der Polysiloxane vorzugsweise OH-Gruppen.

Silanvernetzer im Sinne der Erfindung sind alle nach dem Stand der Technik bekannten Silane mit Acetoxy-, Alkoxy-, Alkoxyalkoxy-, Aminoxy-. Amino-. Amido-, Acetamido- und Oximo-Gruppen. Beispiele hierfür sind Methyltriacetoxysilan, Ethyltriacetoxysilan, Methyltrimethoxysilan, Methyltriethoxysilan, Tetraethylsilicat, Vinyltriethoxysilan, Vinyltrimethoxysilan, Tetrapropylsilicat, Methyltris-(methylethyl-ketoximo)silan, Methylethoxydi-N-methylbenzamidosilan, Methyltris-(butylamino)silan und Methyltris-(diethylaminoxy)silan.

In RTV-2 Massen ist der Silanvernetzer vorzugsweise mindestens ein Alkoxysilan. wie beispielsweise Methyltrimethoxysilan, Tetraethylsilicat, Vinyltriethoxysilan. Vinyltrimethoxysilan. Tetrapropylsilicat und/oder deren Teilhydrolysate.

Füllstoffe sind vorzugsweise verstärkende und nichtverstärkende Füllstoffe, wie z.B. pyrogene oder gefällte Kieselsäure, Ruß oder Quarzmehl. Die Füllstoffe können gegebenenfalls oberflächenmodifiziert sein. Es können auch Gemische von Füllstoffen beliebiger Zusammensetzung eingesetzt werden. In einer bevorzugten Ausführungsform der Erfindung ist der Füllstoff Kieselsäure.

Zusatzstoffe im Sinne der Erfindung sind vorzugsweise Weichmacher, Haftmittel, Pigmente, Stabilisatoren. weitere Cokatalysatoren und Fungizide.

In einer bevorzugten Ausführungsform der vorliegenden Erfindung sind die Hilfsstoffe Siliconweichmacher, wie z.B. Polydimethylsiloxane mit Trimethylsiloxyendgruppen und einer Viskosität von 0,1 bis 5 Pas. Stabilisatoren, wie z.B. Hexamethyldisilazan und/oder Verbindungen, wie sie in US-A 4 417 042 aufgeführt sind. Haftmittel, wie z.B. organofunktionelle Silane der Formel (IV):

Z-CH₂-CH₂-CH₂-Si(OR⁴)_{3-d} R⁴_{d}

mit
- d =: 0 oder 1,
- Z =: -NH₂, -NH-CH₂-CH₂-NH₂, 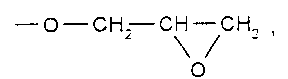 -O-C(O)-C(CH₃)=CH₂, -SH, -OH, -Cl, -CN und
- R⁴ =: ein linearer oder verzweigter C₁-C₃₀-Alkylrest sowie der Formel (V) 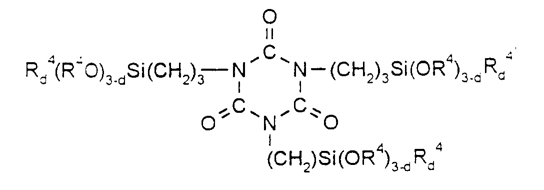
oder Harnstoffderivate

Die Wasserstoffatome in R⁴ können dabei teilweise durch Halogenatome, OH-, NH₂-, NO₂- oder auch weitere C₁-C₆-Alkylreste substituiert sein.

In einer bevorzugten Ausführungsform der Erfindung wird der erfindungsgemäße Zinn-Katalysator "in situ" in der vernetzbaren RTV-Masse hergestellt.

Gegenstand der vorliegenden Erfindung sind daher vernetzbare RTV-Massen, enthaltend mindestens einen Zinn-Katalysator, mindestens ein vernetzungsfähiges Polysiloxan, gegebenenfalls einen oder mehrere Silanvernetzer und gegebenenfalls weitere Zusatz- und Hilfsstoffe, dadurch gekennzeichnet, daß der Zinn-Katalysator in situ durch die Umsetzung von mindestens einer organischen Zinnverbindung a), mindestens einem Monoorthophosphorsäureester und/oder Orthophosphorsäure b) und gegebenenfalls weiteren Phosphorsäureestern c), einem oder mehreren Alkoxysilanen d) und/oder weiteren Hilfsstoffen e) bei der Herstellung der vernetzbaren RTV-Masse hergestellt wird.

Hierbei ist die organische Zinnverbindung vorzugsweise ein Umsetzungsprodukt von Diorganylzinnoxiden mit Kieselsäureestern und/oder Diorganylzinncarboxylaten, wie beispielsweise Dibutylzinnoxid und Dioctylzinnoxid. Dibutylzinndiacetat und Dioctylzinndioctoat, und Komponente b) vorzugsweise mindestens ein Monoester der Orthophosphorsäure, wie beispielsweise Monobutylphosphat, Mono-isodecylphosphat, Mono-(2-ethylhexyl)-phosphat, Monodecylphosphat, Monohexylphosphat. Monotridecylphosphat und Monooctadecylphosphat. Besonders bevorzugt sind Mono-isodecylphosphat, Mono-(2-ethylhexyl)-phosphat, Monodecylphosphat, Monohexylphosphat, Monotridecylphosphat und/oder Monooctadecylphosphat.

In einer bevorzugten Ausführungsform der vorliegenden Erfindung weisen die vernetzbaren RTV-Massen folgende Zusammensetzung auf:
100 Gew.-Teile mindestens eines vernetzungsfähigen Polysiloxans,
0,5 bis 20 Gew.-Teile mindestens eines Silanvernetzer.
0,005 bis 5 Gew.-Teile mindestens eines erfindungsgemäßen Zinn-Katalysators.
0 bis 500 Gew.-Teile mindestens eines Füllstoffes und
0 bis 200 Gew.-Teile weiterer Zusatz- und Hilfsstoffe.

Die Zusatz- und Hilfsstoffe weisen dabei vorzugsweise folgende Zusammensetzung auf:
0 bis 100 Gew.-Teile Weichmacher,
0 bis 20 Gew.-Teile Haftmittel,
0 bis 100 Gew.-Teile Pigmente,
0 bis 20 Gew.-Teile Fungizide und
0 bis 20 Gew.-Teile Co-Katalysatoren und Stabilisatoren und
0 bis 5 Gew.-Teile Scavenger.
wobei die Summe aller Zusatz- und Hilfsstoffe in der Mischung größer 0 ist und maximal 200 Gew.-Teile ergibt.

Die einzelnen Komponenen der vernetzbaren RTV-Massen können in einer beliebigen Reihenfolge vermischt werden. Bevorzugt dabei ist das Vermischen der Komponenten bei Raumtemperatur. Für den Fall der in situ-Herstellung des erfindungsgemäßen Zinn-Katalysators werden die einzelnen Komponenten vorzugsweise bei Raumtemperatur miteinander verrührt.

Die Herstellung der RTV-Massen kann in allen nach dem Stand der Technik gebräuchlichen Mischaggregaten erfolgen, wie z.B. Planetenmischern, Dissolvern, Butterfly-Mischern oder kontinuierlich arbeitenden Mischschnecken.

Die folgenden Beispiele dienen der Erläuterung der Erfindung, ohne dabei limitierend zu wirken.

### Beispiele

### Beispiel 1

In einem Dreihalskolben mit Rührer, Thermometer, Rückflußkühler und Wasserabscheider wurden 150 g Dioctylzinnoxid, 87,2 g Mono-2-ethylhexylphosphat in 400 g Toluol unter Stickstoffatmosphäre vorgelegt. Die Mischung wurde unter Rühren langsam auf 125°C erhitzt und am Wasserabscheider das in der Reaktion gebildete Wasser als Azeotrop mit Toluol abdestilliert und abgetrennt. Nach ca 3 Stunden war die Reaktion beendet und es konnte kein Wasser mehr abdestilliert werden. Anschließend wurde das Reaktionsgemisch bei 80 bis 100°C im Vakuum bei 50 mbar eingeengt bis auf einen Restgehalt von 17 Gew.-% Toluol. Es wurde eine hellgelbe klare Flüssigkeit erhalten. Das Produkt wies laut Elementaranalyse einen Zinngehalt von 17.8 % auf.

### Beispiel 2

In einem Dreihalskolben mit Rührer, Thermometer und Rückflußkühler wurden 150 g Dioctylzinnoxid, 174,4 g Mono-2-ethylhexylphosphat und 178,7 g Tetrapropylsilicat unter Stickstoffatmosphäre vorgelegt. Die Mischung wurde unter Rühren langsam auf 160°C erhitzt und anschließend weitere 3 Stunden bei dieser Temperatur nachgerührt. Anschließend ließ man das Gemisch abkühlen und tauschte den Rückflußkühler gegen einen Destillationsaufsatz mit Kühler und destillierte bei Normaldruck und maximal 160°C alle Flüchtigen Bestandteile innerhalb einer Stunde ab. Es konnten 73.3 g Destillat abgetrennt werden, die mittels Gaschromatographie als Propanol identifiziert wurden. Bei dem Reaktionsprodukt handelte es um eine gelbe klare Flüssigkeit mit einem Zinngehalt (laut Elementaranalyse) von 11,2 %.

### Beispiel 3

In einem Dreihalskolben mit Rührer, Thermometer, Rückflußkühler und Wasserabscheider wurden 200 g Dioctylzinnoxid, 178,3 g Di-2-ethylhexylphosphat und 64 g 85 %ige Phosphorsäure in 400 g Toluol unter Stickstoffatmosphäre vorgelegt. Die Mischung wurde unter Rühren langsam auf ca. 120°C erhitzt und am Wasserabscheider das in der Reaktion gebildete Wasser als Azeotrop mit Toluol abdestilliert und abgetrennt. Nach ca. 2 Stunden war die Umsetzung beendet, und es konnte kein Wasser mehr abdestilliert werden. Anschließend wurde das Reaktionsgemisch bis maximal 110°C zunächst bei Normaldruck und anschließend im Vakuum bei 5 mbar eingeengt bis auf einen Restgehalt von ca 10 Gew-% Toluol. Es wurde eine hellgelbe klare viskose Flüssigkeit erhalten. Das Produkt wies laut Elementaranalyse einen Zinngehalt von 14,4 % auf.

### Vergleichsbeispiel 4

In einem Dreihalskolben mit Rührer, Thermometer und Rückflußkühler wurden 1368 g Dioctylzinnoxid und 1632 g Tetrapropylsilicat unter Stickstoffatmosphäre vorgelegt. Die Mischung wurde unter Rühren langsam auf 160°C erhitzt und anschließend weitere 5 Stunden bei dieser Temperatur nachgerührt. Bei dem Reaktionsprodukt handelte es sich um eine gelbe klare Flüssigkeit. Das Produkt wies laut Elementaranalyse einen Zinngehalt von 14,5 % auf.

### Beispiel 5

70 g des in Beispiel 4 hergestellten Produktes wurden bei Raumtemperatur mit 37 g Mono-2-ethylhexylphosphat umgesetzt. Bei der Mischung handelte es sich um eine klare farblose Flüssigkeit, die für die weiteren Versuche in den RTV-1 Massen eingesetzt wurde.

### Beispiel 6

In einem Dreihalskolben mit Rührer, Thermometer, Rückflußkühler und Wasserabscheider wurden 100 g Dibutylzinnoxid, 168,7 g Mono-2-ethylhexylphosphat in 300 g Toluol unter Stickstoffatmosphäre vorgelegt. Die Mischung wurde unter Rühren langsam auf 125°C erhitzt und am Wasserabscheider innerhalb von ca. 3 Stunden das in der Reaktion gebildete Wasser als Azeotrop mit Toluol abdestilliert und abgetrennt. Anschließend wurde das Reaktionsgemisch bei 110°C im Vakuum bei 10 mbar eingeengt bis auf einen Restgehalt von 11 Gew.-% Toluol. Es wurde eine hellgelbe klare Flüssigkeit erhalten. Das Produkt wies laut Elementaranalyse einen Zinngehalt von 15,4 % auf.

### Vergleichsbeispiel 7

Es wurde eine Lösung von Dibutylzinndioctoat in 50 % Toluol hergestellt. Dieser Zinnkatalysator wurde zu Vergleichzwecken verwendet und stellt ein Produkt dar, das nach dem Stand der Technik als Katalysator bekannt ist und eingesetzt wird.

### Allgemeine Arbeitsweise bei der Herstellung und Beurteilung der RTV-1 Massen

Die Herstellung der Massen erfolgte in einem 1 l-Plantenmischer einsprechend den im folgenden aufgeführten Beispielen. Nach Abschluß der Herstellung wurden die Massen in Kunststoffkartuschen gefüllt. Aus den verschlossenen Kartuschen wurde Material für die entsprechenden weiteren Prüfungen entnommen.

Das Vernetzungsverhalten der Polysiloxanmassen wurde auf einer Glasplatte geprüft, wozu die Pasten in einer Schichtdicke von 2 mm auf einer Fläche von 40 mal 60 mm aufgetragen wurden. Nach 24 Stunden wurde die Durchhärtung des Materials bis zur Glasoberfläche geprüft.

Zur Ermittlung der mechanischen Eigenschaften der Vulkanisate wurden die Pasten in 2 mm dicken Schichten ausgezogen und nach 14-tägiger Aushärtung bei 23°C und 50 % relativer Luftfeuchtigkeit nach DIN 53 504 geprüft. Die Härte wurde nach 21 Tagen entsprechend DIN 53 505 ermittelt.

Die Lagerfähigkeit der Produkte wurde so beurteilt, daß die Pasten in einer verschlossenen Tube bei 50°C bzw. 100°C gelagert wurden. Die bei 50°C gelagerten Proben wurden im Wochenabstand durch Entnahme von Material auf Vernetzung geprüft. Vernetzen die Proben nach 1 Woche einwandfrei, so galt der Test als bestanden. Von den bei 100°C gelagerten Proben wurden täglich Materialproben entnommen und geprüft. Vernetzen die Proben nach einem Tag einwandfrei, so galt der Test als bestanden. Die Prüfung der Lagerfähigkeit bei 50°C und 100°C ist eine bei der Dichtstoffbeurteilung gebräuchliche Methode, die es ermöglicht, in relativ kurzen Zeiträumen die Lagerfähigkeit der Produkte in der Praxis abzuschätzen.

### Beispiele 8 bis 13

In einem Planetenmischer wurden 55,0 Gew.-Teile eines Polydimethylsiloxans mit Si(CH=CH₂)(OCH₃)₂-Endgruppen, das eine Viskosität von 80 Pas bei 25° C besaß, mit 29,0 Gew.-Teilen eines Polydimethylsiloxans mit -OSi(CH₃)₃-Endgruppen, das eine Viskosität von 100 mPas bei 25°C besaß, mit 2,5 Gew.-Teilen Vinyltrimethoxysilan vermischt. Zu dieser Mischung wurden 9,5 Gew.-Teile einer hydrophoben Kieselsäure, die unter der Bezeichnung Aerosil® R 972 bei der Fa. Degussa erhältlich ist, eingearbeitet und die Mischung zu einer homogenen Paste vermischt. Anschließend wurden zu dieser Mischung 0,8 Gew.-Teile 3-Aminopropyltriethoxysilan gegeben und der Versuch durch Zugabe des in Tabelle 1 aufgeführten Zinnkatalysators in der dort angegebenen Menge vervollständigt.

Die RTV-1 Produkte der Beispiele 8 bis 13 härteten nach der Herstellung alle einwandfrei aus. Die Prüfergebnisse können Tabelle 1 entnommen werden. Das Beispiel 13 dient der Demonstration, daß der erfindungsgemäße Zinnkatalysator in situ bei der Dichtstoffherstellung erzeugt werden kann.

### Beispiele 14 bis 19

In einem Planetenmischer wurden 55,0 Gew.-Teile eines Polydimethylsiloxans mit Si(CH=CH₂)(OCH₃)₂-Endgruppen, das eine Viskosität von 80 Pas bei 25°C besaß. mit 29,0 Gew.-Teilen eines Polydimethylsiloxans mit -OSi(CH₃)₃-Endgruppen. das eine Viskosität von 100 mPas bei 25°C besaß, mit 2,5 Gew.-Teilen Vinvltrimethoxysilan vermischt. Zu dieser Mischung wurden 9,5 Gew.-Teile einer hydrophoben Kieselsäure, die unter der Bezeichnung Aerosil® R 972 bei der Fa. Degussa erhältlich ist. eingearbeitet und die Mischung zu einer homogenen Paste vermischt. Anschließend wurden zu dieser Mischung 0,8 Gew.-Teile 3-Aminopropyltriethoxysilan gegeben und der Versuch durch Zugabe der in Tabelle 2 angegebenen Menge Hexamethyldisilazan und des aufgeführten Zinnkatalysators in der dort angegebenen Menge vervollständigt.

Die RTV-1 Produkte härteten nach der Herstellung alle einwandfrei aus. Die Prüfergebnisse können Tabelle 2 entnommen werden. Die Beispiele 17 bis 19 zeigen, daß mit steigender Menge Stabilisator Hexamethyldisilazan (ab 0,4 Gew.-Teilen, Bsp. 181, Tabelle 2) eine deutliche Verbesserung der Lagerstabilität zu beobachten ist. Die Lagerstabilität der Kombinationen aus den erfindungsgemäßen Katalysatoren und Hexamethyldisilazan ist verglichen mit den herkömmlichen Zinnkatalysatoren (Vergleichsversuche 15, 16) deutlich besser.

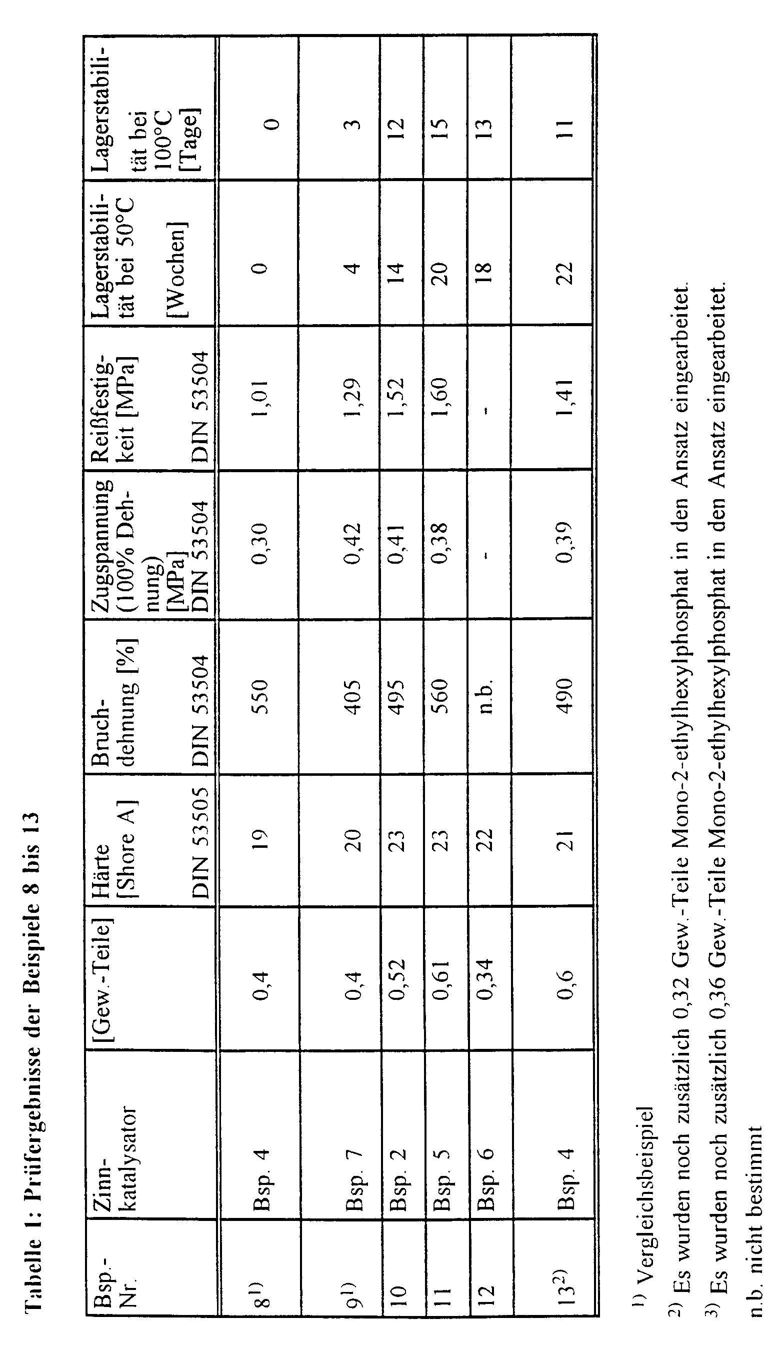

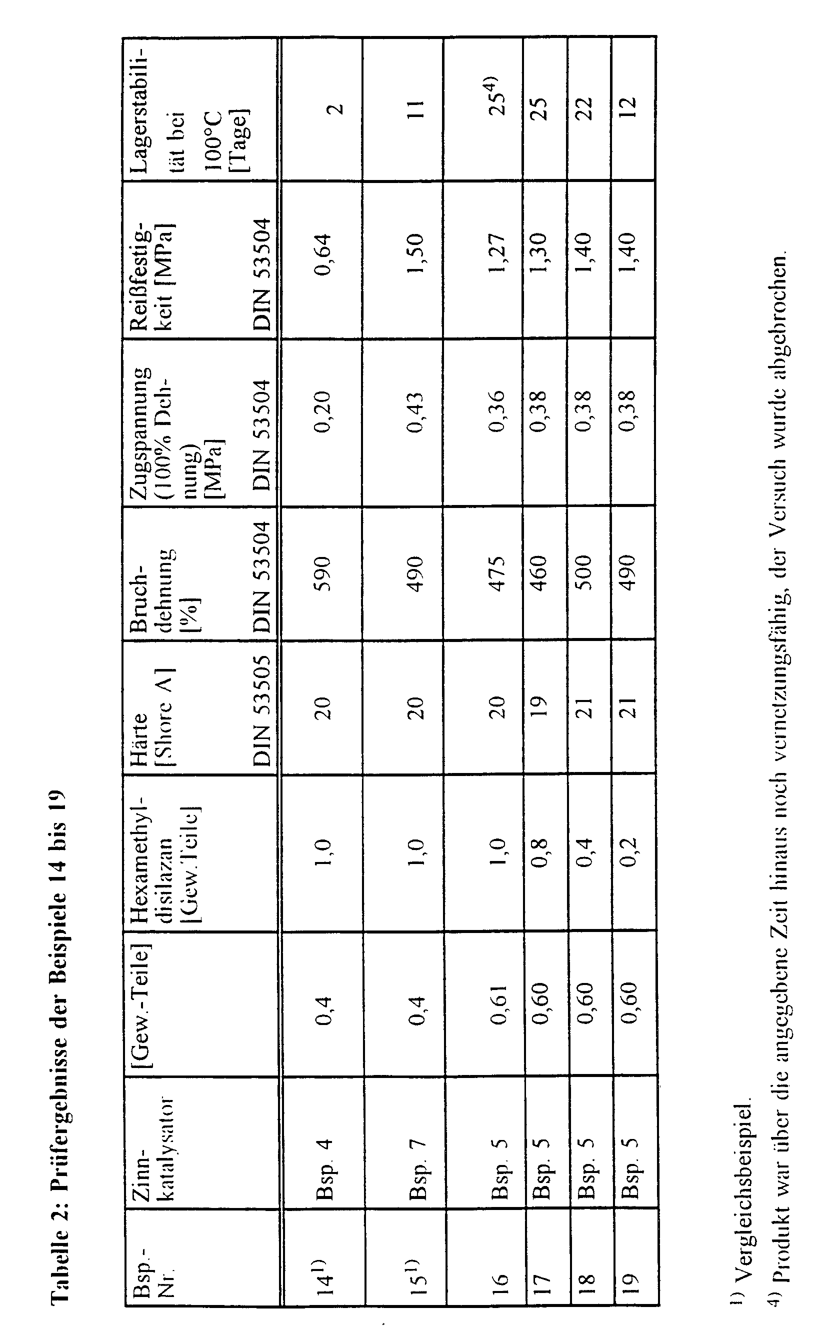

## Patentansprüche

1. Verwendung von Zinn-Katalysatoren, erhältlich durch die Umsetzung von
a) mindestens einer organischen Zinnverbindung mit
b) mindestens einem Monoorthophosphorsäureester, Orthophosphorsäure, Estern der folgenden Formel (II)
O=P(OR²)₃₋ₘ(OR³)ₘ (II),
mit m = 2 oder 3, bevorzugt 2,
R² = lineare oder verzweigte C₁-C₃₀-Alkyl-, Acyl-, C₂-C₃₀-Alkenyl- oder Alkoxyalkyl-, C₅-C₁₄-Cycloalkyl- oder C₆-C₁₄-Arylreste oder ein Triorganylsilyl- oder Diorganylalkoxysilylrest,
R³ = Wasserstoff und/oder ein Metall,
Verbindungen der Formel III 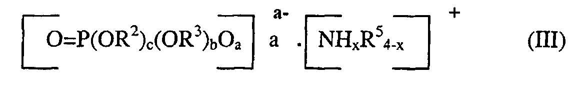 worin x Werte von 1 bis einschließlich 3 annehmen kann
R⁵ = C₁-C₃₀ Alkyl und (CH₂)_{z}Si(OR⁶)₃
mit z= 1-10, bevorzugt 3, mit a + b + c = 3, wobei
a Werte von 1 bis einschließlich 3,
b Werte von 0 bis einschließlich 2 und
c Werte von 0 bis einschließlich 2 annehmen kann,
R⁶ = C₁-C₅-Alkyl, C₂-C₆-Alkylalkoxy, und/oder
Estern der Polyphosphorsäure,
c) gegebenenfalls weiteren Phosphorsäureestern und
d) gegebenenfalls einem Alkoxysilan oder mehreren Alkoxysilanen,
als Katalysatoren für kondensationsvernetzende Polysiloxanmassen.

2. Verwendung nach Anspruch 1, **dadurch gekennzeichnet, daß** die organische Zinnverbindung eine Verbindung der Formel (I)
R¹ ₄₋ₙSnXₙ (I),
mit
n = 1,2 oder 3,
R¹ = lineare oder verzweigte C₁-C₃₀-Alkyl-, C₅-C₁₄-Cycloalkyl- oder C₆-C₁₄-Arylreste und
X = Halogen-, -OR¹-, -OC(O)R¹, -OH, -SR¹, -NR¹₂, -NHR¹, -OSiR¹₃, -OSi(OR¹)₃ und/oder Verbindungen der allgemeinen Formel R¹₂SnX', R¹₃SnX'_{1/2} und/ oder R¹SnX'_{3/2} mit X' = O, S ist.

3. Verwendung nach einem der Ansprüche 1 bis 2, **dadurch gekennzeichnet, daß** die Komponente b) eine Verbindung der Formel
O=P(OR²)₃₋ₘ(OR³)ₘ (II),
mit
m = 2 oder 3,
R² = lineare oder verzweigte C₁-C₃₀-Alkyl-, Acyl-, C₂-C₃₀-Alkenyl- oder Alkoxyalkyl-, C₅-C₁₄-Cycloalkyl- oder C₆-C₁₄-Arylreste oder ein Triorganylsilyl- oder Diorganylalkoxysilylrest,
R³ = Wasserstoff und/oder ein Metall, vorzugsweise ein Alkali- oder Erdalkalimetall,
und/oder Verbindungen der Formel III 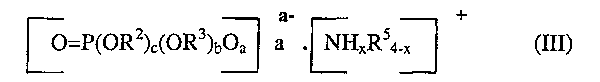 und x Werte von 1 bis einschließlich 3 annehmen kann
R⁵ = C₁-C₃₀ Alkyl und (CH₂)_{z}Si(OR⁶)₃
mit z = 1-10, bevorzugt 3, mit a + b + c = 3, wobei
a Werte von 1 bis einschließlich 3,
b Werte von 0 bis einschließlich 2 und
c Werte von 0 bis einschließlich 2 annehmen kann,
R⁶ = C₁-C₅-Alkyl, C₂-C₆-Alkylalkoxy und/oder
Ester der Polyphosphorsäure, ist.

4. Verwendung nach einem der Ansprüche 1 bis 3, **dadurch gekennzeichnet, daß** die Komponente c) ein Di- und Triester der Orthophosphorsäure und/oder Polyphosphorsäure ist.

5. Verwendung nach einem der Ansprüche 1 bis 4, **dadurch gekennzeichnet, daß** Komponente d) Kieselsäureester, Organyltrialkoxysilane und/oder deren Teilhydrolysat ist.

6. Verwendung nach einem der Ansprüche 1 bis 5, **dadurch gekennzeichnet, daß** die Zinn-Katalysatoren zusätzlich als Hilfsstoffe e) organische Lösungsmittel, Farbpigmente und/oder organische Säuren enthalten.

7. Verwendung nach einem der Ansprüche 1 bis 6, **dadurch gekennzeichnet, daß** die Zinn-Katalysatoren erhältlich sind durch die Umsetzung von 1 mol mindestens einer Diorganylzinnverbindung a) mit 1 bis 3 mol mindestens eines Monoorthophosphorsäureesters und 0 bis 5 mol mindestens eines Alkoxysilans.

8. Vernetzbare RTV-Polysiloxanmassen (RTV ≡ raumtemperaturvulkanisierend), enthaltend mindestens einen Zinn-Katalysator gemäß der Definition nach einem der Ansprüche 1 bis 7,
- mindestens ein vernetzungsfähiges Polysiloxan,
- gegebenenfalls einen oder mehrere Silanvernetzer,
- gegebenenfalls Füllstoffe und
- gegebenenfalls weitere Zusatz- und Hilfsstoffe.

9. Vernetzbare RTV-Polysiloxanmassen nach Anspruch 8, **dadurch gekennzeichnet, daß** der Silanvernetzer Methyltrimethoxy-, Methyltriethoxy-, Vinyltrimethoxyund/oder Vinyltriethoxysilan ist.

10. Vernetzbare RTV-Polysiloxanmassen, enthaltend mindestens einen Zinn-Katalysator, mindestens ein vernetzungsfähiges Polysiloxan, gegebenenfalls einen oder mehrere Silanvernetzer und gegebenenfalls weitere Zusatz- und Hilfsstoffe, **dadurch gekennzeichnet, daß** der Zinn-Katalysator in situ durch die Umsetzung von mindestens einer organischen Zinnverbindung a), der Komponente b), wie im Anspruch 1 definiert, und gegebenenfalls weiteren Phosphorsäureestern c), einem oder mehreren Alkoxysilanen d) und/oder weiteren Hilfsstoffen e) bei der Herstellung der vernetzbaren RTV-Polysiloxanmasse hergestellt wird.

11. Vernetzbare RTV-Polysiloxanmassen nach einem der Ansprüche 8 oder 9, **dadurch gekennzeichnet, daß** diese zusätzlich Kieselsäure enthalten.

12. Vernetzbare RTV-Polysiloxanmasse nach einem der Ansprüche 9 bis 11, **dadurch gekennzeichnet, daß** der Monoorthophosphorsäureester b) Mono-isodecylphosphat, Mono-(2-ethylhexyl)-phosphat, Monodecylphosphat, Monohexylphosphat, Monotridecylphosphat und/oder Monooctadecylphosphat ist.

13. Verwendung nach einem der Ansprüche 1 bis 7 als Katalysator in RTV-1 oder RTV-2-Polysiloxanmassen.

## Claims

1. Use of tin catalysts obtainable by reaction of
a) at least one organotin compound with
b) at least one monoorthophosphoric acid ester, orthophosphoric acid, esters of the following formula (II)
O=P(OR²)₃₋ₘ(OR³)ₘ (II)
where m = 2 or 3, preferably 2,
R₂ = linear or branched C₁-C₃₀ alkyl, acyl, C₂-C₃₀ alkenyl or alkoxyalkyl, C₅-C₁₄ cycloalkyl or C₆-C₁₄ aryl radicals or a triorganosilyl or diorganoalkoxysilyl radical,
R³ = hydrogen and/or a metal,
compounds of the formula III 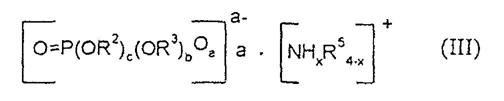 where x may assume values from 1 to 3 inclusive
R⁵ = C₁-C₃₀ alkyl and (CH₂)_{z}Si(OR⁶)₃
where z = 1-10, preferably 3,
and a + b + c = 3, subject to the proviso that
b may assume values from 0 to 2 inclusive and
c may assume values from 0 to 2 inclusive,
R⁶ = C₁-C₅ alkyl, C₂-C₆ alkoxyalkyl, and/or esters of polyphosphoric acid,
c) optionally further phosphoric acid esters and
d) optionally an alkoxysilane or plural alkoxysilanes
as catalysts for condensation-crosslinking polysiloxane compositions.

2. Use according to Claim 1, **characterized in that** the organotin compound is a compound of the formula (I)
R¹ ₄₋ₙSnXₙ (I)
where
n = 1, 2 or 3,
R¹ = linear or branched C₁-C₃₀ alkyl, C₅-C₁₄ cycloalkyl or C₆-C₁₄ aryl radicals and
X = halogen, -OR¹-, -OC(O)R¹, -OH, -SR¹, -NR¹₂, -NHR¹, -OSiR¹₃, -OSi(OR¹)₃ and/or compounds of the general formula R¹₂SnX', R¹₃SnX'_{1/2} and/or R¹SnX'_{3/2} where X' = O, S.

3. Use according to either of Claims 1 and 2,
**characterized in that** the component b) is a compound of the formula
O=P(OR²)₃₋ₘ(OR³)ₘ (II)
where
m = 2 or 3,
R² = linear or branched C₁-C₃₀ alkyl, acyl, C₂-C₃₀ alkenyl or alkoxyalkyl, C₅-C₁₄ cycloalkyl or C₆-C₁₄ aryl radicals or a triorganosilyl or diorganoalkoxysilyl radical,
R³'= hydrogen and/or a metal, preferably an alkali or alkaline earth metal,
and/or compounds of the formula III 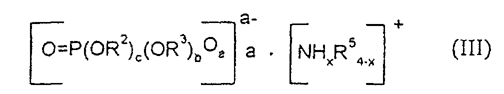 where x may assume values from 1 to 3 inclusive
R⁵ = C₁-C₃₀ alkyl and (CH₂)_{z}Si(OR⁶)₃
where z = 1-10, preferably 3, and
a + b + c = 3, subject to the proviso that
a may assume values from 1 to 3 inclusive,
b may assume values from 0 to 2 inclusive and
c may assume values from 0 to 2 inclusive,
R⁶ = C₁-C₅ alkyl, C₂-C₆ alkoxyalkyl, and/or esters of polyphosphoric acid.

4. Use according to any of Claims 1 to 3, **characterized in that** component c) is a di- and triester of orthophosphoric acid and/or polyphosphoric acid.

5. Use according to any of Claims 1 to 4, **characterized in that** component d) is silicic acid esters, organotrialkoxysilanes and/or their partial hydrolysate.

6. Use according to any of Claims 1 to 5, **characterized in that** the tin catalysts additionally contain organic solvents, colour pigments and/or organic acids as auxiliary substances e).

7. Use according to any of Claims 1 to 6, **characterized in that** the tin catalysts are obtainable by the reaction of 1 mol of at least one diorganotin compound a) with 1 to 3 mol of at least one monoorthophosphoric acid ester and 0 to 5 mol of at least one alkoxysilane.

8. Crosslinkable RTV (room temperature vulcanizing) polysiloxane compositions containing at least one tin catalyst as per the definition according to any of Claims 1 to 7,
- at least one crosslinkable polysiloxane,
- optionally one or more silane crosslinkers,
- optionally fillers and
- optionally further additive and auxiliary substances.

9. Crosslinkable RTV polysiloxane compositions according to Claim 8, **characterized in that** the silane crosslinker is methyltrimethoxysilane, methyltriethoxysilane, vinyltrimethoxysilane and/or vinyltriethoxysilane.

10. Crosslinkable RTV polysiloxane compositions containing at least one tin catalyst, at least one crosslinkable polysiloxane, optionally one or more silane crosslinkers and optionally further additive and auxiliary substances, **characterized in that** the tin catalyst is prepared in situ by the reaction of at least one organotin compound a), component b) as defined in claim 1, and optionally further phosphoric acid esters c), one or more alkoxysilanes d) and/or further auxiliary substances e) in the course of the preparation of the crosslinkable RTV polysiloxane composition.

11. Crosslinkable RTV polysiloxane compositions according to either of Claims 8 and 9, **characterized in that** these additionally contain silicic acid.

12. Crosslinkable RTV polysiloxane composition according to any of Claims 9 to 11, **characterized in that** the monoorthophosphoric acid ester b) is monoisodecyl phosphate, mono-(2-ethylhexyl) phosphate, monodecyl phosphate, monohexyl phosphate, monotridecyl phosphate and/or monooctadecyl phosphate.

13. Use according to any of Claims 1 to 7 as a catalyst in RTV-1 or RTV-2 polysiloxane compositions.

## Revendications

1. Utilisation de catalyseurs d'étain pouvant être préparés par réaction de
a) au moins un composé organique d'étain avec
b) au moins un ester d'acide monoorthophosphorique, d'acide orthophosphorique,
des esters de formule suivante (II)
O=P(OR²)₃₋ₘ(OR³)ₘ (II),
avec m = 2 ou 3, de préférence 2,
R² = un radical alkyle linéaire ou ramifié en C₁-C₃₀, acyle, alcényle ou alcoxyalkyle en C₂-C₃₀, cycloalkyle en C₅-C₁₄ ou aryle en C₆-C₁₄ ou un radical triorganylsilyle ou diorganylalcoxysilyle,
R³ = l'hydrogène et/ou un métal,
des composés de formule III 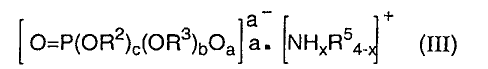 dans laquelle x peut prendre les valeurs de 1 à 3 y compris
R⁵ = un radical alkyle en C₁-C₃₀ et (CH₂)_{z}Si(OR⁶)₃
avec z = 1 - 10, de préférence 3,
avec a + b + c = 3, où
a peut prendre les valeurs de 1 à 3 y compris,
b peut prendre les valeurs de 0 à 2 y compris,
c peut prendre les valeurs de 0 à 2 y compris,
R⁶ = un reste alkyle en C₁-C₅, alkylalcoxy en C₂-C₆, et/ou des esters de l'acide polyphosporique,
c) éventuellement d'autres esters d'acide phosphorique et
d) éventuellement un alcoxysilane ou plusieurs alcoxysilanes,
comme catalyseurs pour des masses de polysiloxanes réticulant par condensation.

2. Utilisation selon la revendication 1, **caractérisée en ce que** le composé organique d'étain est un composé de formule
R¹ ₄₋ₙSnXₙ (I),
avec
n = 1, 2 ou 3,
R¹ = un reste alkyle en C₁-C₃₀ linéaire ou ramifié, cycloalkyle en C₅-C₁₄ ou aryle en C₆-C₁₄ et
X = un halogène, -OR¹, -OC(O)R¹, -OH, -SR¹, -NR¹₂, -NHR¹, -OSiR¹₃, -OSi(OR¹)₃ et/ou des composés de formule générale R¹₂SnX', R¹₃SnX'_{1/2} et/ou R¹SnX'_{3/2} avec X' = O, S.

3. Utilisation selon l'une des revendications 1 à 2, **caractérisée en ce que** le composant b) est un composé de formule
O=P(OR²)₃₋ₘ(OR³)ₘ (II),
avec m = 2 ou 3,
R² = un radical alkyle linéaire ou ramifié en C₁-C₃₀, acyle, alcényle ou alcoxyalkyle en C₂-C₃₀, cycloalkyle en C₅-C₁₄ ou aryle en C₆-C₁₄ ou un radical triorganylsilyle ou diorganylalcoxysilyle,
R³ = l'hydrogène et/ou un métal, de préférence un métal alcalin ou alcalino-terreux,
et/ou un composé de formule III 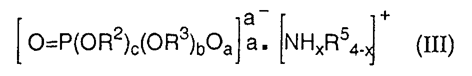 dans laquelle x peut prendre les valeurs de 1 à 3 y compris
R⁵ = un radical alkyle en C₁-C₃₀ et (CH₂)_{z}Si(OR⁶)₃
avec z = 1 - 10, de préférence 3, avec a + b + c = 3, où
a peut prendre les valeurs de 1 à 3 y compris,
b peut prendre les valeurs de 0 à 2 y compris,
c peut prendre les valeurs de 0 à 2 y compris,
R⁶ = un reste alkyle en C₁-C₅, alkylalcoxy en C₂-C₆, et/ou des esters de l'acide polyphosporique,

4. Utilisation selon l'une des revendications 1 à 3, **caractérisée en ce que** le composant c) est un di ou triester de l'acide orthophosphorique et/ou de l'acide polyphosphorique.

5. Utilisation selon l'une des revendications 1 à 4, **caractérisée en ce que** le composant d) est un ester d'acide sificique, un organyltrialcoxysilane et/ou leur hydrolysat partiel.

6. Utilisation selon l'une des revendications 1 à 5, **caractérisée en ce que** les catalyseurs d'étain contiennent en outre comme auxiliaires e) des solvants organiques, pigments colorants et/ou des acides organiques.

7. Utilisation selon l'une des revendications 1 à 6, **caractérisée en ce que** les catalyseurs d'étain peuvent être obtenus par réaction de 1 mole d'au moins un composé diorganylétain a) avec 1 à 3 moles d'au moins un ester d'acide monoorthophosphorique et 0 à 5 moles d'au moins un alcoxysilane.

8. Masses de polysiloxane RTV réticulable (RTV = vulcanisant à température ambiante), contenant au moins un catalyseur d'étain selon la définition selon l'une des revendications 1 à 7,
- au moins un polysiloxane apte à la réticulation,
- éventuellement un ou plusieurs agent réticulant silanes,
- éventuellement des charges et
- éventuellement d'autres additifs et auxiliaires.

9. Masses de polysiloxane RTV réticulable selon la revendication 8, **caractérisées en ce que** l'agent réticulant silane est le méthyltriméthoxysilane, le méthyltriéthoxysilane, le vinyltriméthoxysilane et/ou le vinyltriéthoxysilane.

10. Masses de polysiloxane RTV réticulable, contenant au moins un catalyseur d'étain, au moins un polysiloxane apte à la réticulation, éventuellement un ou plusieurs agents réticulants silane et éventuellement d'autres additifs et auxiliaires, **caractérisées en ce que** le catalyseur au zinc est préparé in situ par réaction d'au moins un composé d'étain organique a), le composant b) selon la revendication 1, et éventuellement d'autres esters d'acide phosphorique c), d'un ou plusieurs alcoxysilanes d) et/ou d'autres auxiliaires e) pendant la préparation des masses de polysiloxane RTV réticulable.

11. Masses de polysiloxane RTV réticulable selon l'une des revendications 8 ou 9, **caractérisées en ce qu'**elles contiennent en outre de l'acide silicique.

12. Masses de polysiloxane RTV réticulable selon l'une des revendications 9 à 11, **caractérisées en ce que** l'ester monoorthophosphorique b) est le monoisodécylphosphate, le mono-(2-éthylhexyl)-phosphate, le monodécylphosphate, le monohexylphosphate, le monotridécylphosphate et/ou le monooctadécylphosphate.

13. Utilisation selon l'une des revendications 1 à 7 comme catalyseur dans des masses de polysiloxane RTV-1 ou RTV-2.
